# EUROPÄISCHE PATENTSCHRIFT

(11) **EP 2 153 718 B1**
(45) Veröffentlichungstag und Bekanntmachung des Hinweises auf die Patenterteilung: **19.10.2011**
(21) Anmeldenummer: 09167850.8
(22) Anmeldetag: 13.08.2009
(51) Int. Cl.: A01K 63/00, A01K 63/04

(54) **Quallenbecken**
Jellyfish tank
Bassin pour méduses

(30) Priorität: 14.08.2008 DE 102008037958
(43) Veröffentlichungstag der Anmeldung: 17.02.2010
(73) Patentinhaber: Zoologischer Garten Berlin AG, 10787 Berlin (DE)
(72) Erfinder: Kaiser, Rainer, 10787, Berlin (DE)
(74) Vertreter: Eisenführ, Speiser & Partner

(56) Entgegenhaltungen:
- JP-A- 10 098 977
- JP-A- 2000 125 695
- JP-U- 4 091 669

## Beschreibung

Die Erfindung betrifft ein Wasserbehältnis zur Haltung von Quallen.

Wie bei Aquarien im Allgemeinen üblich, muss auch bei einem Aquarium zur Haltung von Quallen (im Folgenden auch "Quallenbecken" genannt) ein gewisser Wasserumlauf vorgesehen sein, d.h. das das Aquarium bildende Wasserbehältnis benötigt einen Wasserzulauf und einen Wasserablauf. Ein Umlauf des Wassers in dem Wasserbehältnis führt notwendigerweise dazu, dass es zu Wasserströmungen in dem Wasserbehältnis kommt. Quallen sind diesbezüglich besonders empfindliche Tiere, da sie z.B. leicht an die Mündung eines Wasserauslasses gesogen werden und dort verenden. Üblicherweise können daher Quallen nur wenige Wochen oder höchstens wenige Monate in einem Aquarium überleben. Auf der anderen Seite benötigen die Quallen bewegtes Wasser, um zu überleben.

Das Dokument JP 04 091669 U zeigt ein Aquarium zur Haltung von Quallen mit einem Wasserbehältnis, welches an seinem unteren Ende eine Bodenplatte mit einer Vielzahl von Öffnungen aufweist. Unterhalb der Bodenplatte sind wenigstens eine Zuleitungsrohrleitung und eine Ableitungsrohrleitung zum Zu- bzw. Ableiten von Wasser vorgesehen.

Das Wasser strömt durch die in der Bodenplatte vorgesehenen Öffnungen in den Raum oberhalb der Bodenplatte und wieder zurück.

Das Dokument JP 2000 125695 A zeigt ein Aquarium zur Haltung von Zierfischen mit einer Bodenplatte, die eine Vielzahl von Öffnungen aufweist. Wasser wird unterhalb der Bodenplatte in das Aquarium eingeleitet und abgesaugt, sodass der Wasseraustausch mit dem Raum oberhalb der Bodenplatte durch die in der Bodenplatte vorgesehenen Öffnungen stattfindet.

Aufgabe der Erfindung ist es, ein. Aquarium insbesondere zur Haltung von Quallen zu schaffen, welches die Voraussetzungen dafür bietet, dass Quallen in dem Aquarium eine höhere Lebenserwartung haben.

Erfindungsgemäß wird diese Aufgabe durch ein Aquarium gelöst, das als Wasserbehältnis zur Aufnahme beispielsweise von Quallen dient, welches in seinem unteren Ende durch eine Bodenplatte begrenzt ist. In dieser Bodenplatte befindet sich gemäß Anspruch 1 eine Vielzahl von Einlassöffnungen zum Einleiten von Wasser in das Wasserbehältnis und Absaugöffnungen zum Absaugen von Wasser aus dem Wasserbehältnis, die als Wasserauslass des Wasserbehältnisses dienen. Die Einlassöffnungen und die Absaugöffnungen sind jeweils über die gesamte Fläche der Bodenplatte vorzugsweise gleichmäßig verteilt, so dass sich im gesamten Wasserbehältnis sehr gleichmäßige Strömungsverhältnisse ergeben. Die Vielzahl von Einlassöffnungen ist dabei wenigstens durch eine Zuleitungsrohrleitung miteinander verbunden und die Vielzahl von Absaugöffnungen münden in einen unterhalb der Bodenplatte des Wasserbehältnisses befindlichen Wasserraum. In diesem ist eine Ableitungsrohrleitung verlegt, die eine Vielzahl von Ansaugöffnungen besitzt, um Wasser aus dem Wasserraum anzusaugen.

Ein derartiges Aquarium als Quallenbecken erlaubt es sowohl die Wasserzufuhr als auch die Absaugung des Wasser in einer Weise auf der Unterseite des Quallenbeckens durchzuführen, die ein längerfristiges Überleben der Quallen im Quallenbecken erlaubt. Dabei können die Seitenwände völlig glatt ausgeführt werden, da sie keinerlei Technik aufweisen müssen. Derart glatte Seitenwände führen zu einem völlig freien Wasserraum ohne Hindernisse oder Vorsprünge und tragen so zu einem besseren Überleben von Quallen bei.

Besonders vorteilhaft ist hier sowohl unter mechanischen als auch unter ästhetischen Gesichtspunkten eine Ausführung der Seitenwände in Form eines durchsichtigen Zylinders aus Glas, insb. Plexiglas. Ein derartiger Zylinder kann die infolge des Wasserdrucks im Inneren herrschenden Kräfte gut aufnehmen, ohne dass Biegebelastungen auftreten und erlaubt gleichzeitig einen guten Einblick von allen Seiten. Dies erlaubt vergleichsweise großvolumige Quallenbecken, die es bisher insbesondere wegen der Empfindlichkeit der Quallen in Bezug auf die Wasserbewegung im Aquarium nicht gab, zumindest nicht in einer Form, die ein längeres Überleben der Quallen erlaubt.

Die Zuleitungsrohrleitung und die Ableitungsrohrleitung sind jeweils vorzugsweise als Ringleitung ausgebildet, die sich jeweils von je einem Wasseranschluss ausgehend in beide Richtungen erstrecken. Dadurch können die Druck- und Strömungsverhältnisse in den Rohrleitungen und damit im Wasserbehältnis noch besser gleichmäßig gehalten werden.

Vorzugsweise sind die Einlassöffnungen und die Absaugöffnungen jeweils in parallel zueinander verlaufenden Reihen in der Bodenplatte des Wasserbehältnisses angeordnet, wobei vorzugsweise zwischen jeweils zwei Reihen Einlassöffnungen drei bis acht Reichen von Absaugöffnungen angeordnet sind. Die Anzahl der Absaugöffnungen ist dabei vorzugsweise zehn- bis zwanzigmal größer als die Anzahl der Einlassöffnungen, so dass der Abstand der Einlassöffnungen innerhalb der jeweiligen Reihe von Einlassöffnungen größer als der Abstand, den die Absaugöffnungen innerhalb der jeweiligen Reihe von den Absaugöffnungen voneinander haben.

Vorzugsweise besitzen die einzelnen Einlassöffnungen jeweils eine größere Querschnittsfläche als die einzelnen Absaugöffnungen. Auch die Gesamtfläche aller Einlassöffnungen ist vorzugsweise geringer als diejenige der Absaugöffnungen. Beispielsweise haben sich Einlassöffnungen mit einem Durchmesser von je etwa 0,5 bis 0,8 cm und Auslassöffnungen mit einem Durchmesser von je etwa 0,2 bis 0,3 cm bewährt. Die Gesamtfläche der Absaugöffnungen ist vorzugsweise etwa 10 bis 15 mal größer, als die Gesamtfläche der Einlassöffnungen. Im Ergebnis führt dies dazu, dass die Strömungsgeschwindigkeit beim Einströmen von Wasser in das Wasserbehältnis größer ist als die Strömungsgeschwindigkeit des abgesaugten Wassers. Dies sorgt im gesamten Wasserbehältnis für eine permanente, nach oben gerichtete Wasserbewegung, die die Quallen zum Überleben benötigen. Gleichzeitig wird auf diese Weise verhindert, dass es zu zu starken Verwirbelungen des Wassers kommt oder dass Quallen gegen die Absaugöffnungen gesaugt werden.

Vorzugsweise die Zuleitungsrohrleitung und die Ableitungsrohrleitung übereinander angeordnet sind.

In Bezug auf die unterhalb der Bodenplatte angeordneten Ableitungs- und Zuleitungsrohrleitungen ist es bevorzugt, dass die Ableitungsrohrleitung an die Zuleitungsrohrleitung angrenzt. Und zwar sind die Ableitungsrohrleitung und die Zuleitungsrohrleitung vorzugsweise übereinander angeordnet, wobei die Zuleitungsrohrleitung vorzugsweise unter der Bodenplatte unmittelbar an diese angrenzend angeordnet ist und auf ihrer Oberseite Einlassöffnungen aufweist, die in die Einlassöffnungen der Bodenplatte unmittelbar übergehen, so dass Wasser aus der Zuleitungsrohrleitung unmittelbar in die Einlassöffnungen gerät und von dort in das Wasserbehältnis. Die Ableitungsrohrleitung besitzt vorzugsweise zu beiden Seiten seitlich angeordnete Ansaugöffnungen, die in den Wasserraum unterhalb der Bodenplatte münden. Dieser Wasserraum ist dann über die Absaugöffnungen mit dem Wasserbehältnis (d.h. dem Raum oberhalb der Bodenplatte) verbunden.

Vorzugsweise bilden die Bodenplatte und die Zuleitungs- sowie die Ableitungsrohrleitung eine modulartig zusammenhängende Baueinheit, die als ganzes gewechselt oder zum Reinigen entnommen werden kann. Zur weiteren Stabilisierung einer solchen Baueinheit können am Umfangsrand der Bodenplatte an deren Unterseite oder deren Oberseite oder beiden umlaufende Verstärkungsringe oder -schürzen vorgesehen sein.

Vorzugsweise sind die Ableitungsrohrleitung und die Zuleitungsrohrleitung derart schlangenlinienförmig entlang des Bodens so verlegt, dass sich grade Rohrleitungsabschnitte und Wendeabschnitte einander abwechseln, wobei die graden Rohrleitungsabschnitte jeweils parallel zueinander verlaufen.

Vorzugsweise ist der Wasserraum auf seiner Unterseite durch einen Boden begrenzt und die Ableitungsrohrleitung und die Zuleitungsrohrleitung den Wasserraum in eine Mehrzahl von Teilräumen unterteilen, die wenigstens durch einen Zwischenraum zwischen der Zuleitungsrohrleitung und dem Boden des Wasserraums miteinander verbunden sind, so dass der Wasserraum insgesamt zusammenhängend ist und in ihm ein gleichmäßiger Druck herrscht. Dabei kann der Abstand zwischen der Zuleitungsrohrleitung und dem Boden des Wasserraums kleiner sein, als der Durchmesser der Zuleitungsrohrleitung. Auf diese Weise sind die Teilräume des Wasserraums auch direkt (und nicht nur über die Ableitungsrohrleitung und deren beidseitige Öffnungen) miteinander verbunden, was zu einer Vergleichmäßigung der Druckverteilung im Wasserraum und damit der Absaugströmung im Wasserbehältnis führt.

Ziel ist es einen zusammenhängenden Wasserraum möglichst geringer Bauhöhe zu schaffen. Dazu ist es grundsätzlich auch möglich, Abschnitte der Zuleitungsrohrleitung und der Ableitungsrohrleitung versetzt zueinander anzuordnen, anstelle sie unmittelbar übereinander anzuordnen. Dadurch kann die Bauhöhe des Wasserraums noch weiter verringert werden, jedoch auf Kosten eines stabilen, zusammenhängenden Moduls aus Bodenplatte und Rohrleitungen und ggf. auf Kosten besonders gleichmäßiger Druckverhältnisse im Wasserraum.

Die Erfindung soll nun anhand eines Ausführungsbeispiels mit Bezug auf die Figuren näher erläutert werden. Diese zeigen in:
- Fig. 1:: ein Wasserbehältnis als Quallenbecken in perspektivischer Darstellung;
- Fig. 2:: einen Längsschnitt durch das Wasserbehältnis aus Fig. 1 mit darunter an- geordnetem Wasserraum;
- Fig. 3:: eine Draufsicht auf eine das Wasserbehältnis von dem Wasserraum tren- nende Bodenplatte;
- Fig. 4:: eine Ansicht auf die Bodenplatte von unten mit an der Bodenplatte befestig- ten Zuleitungs- und Ableitungsrohrleitungen;
- Fig. 4a-c:: Ansichten auf die Bodenplatte von unten mit an der Bodenplatte befestigten Zuleitungs- und Ableitungsrohrleitungen;
- Fig. 5:: einen Ausschnitt durch einen Querschnitt durch den Wasserraum und insbe- sondere die Bodenplatte und die Zu- und Ableitungsrohrleitungen; und
- Fig. 6:: ein hydraulisches Schaltbild des Aquariums aus Fig. 1.

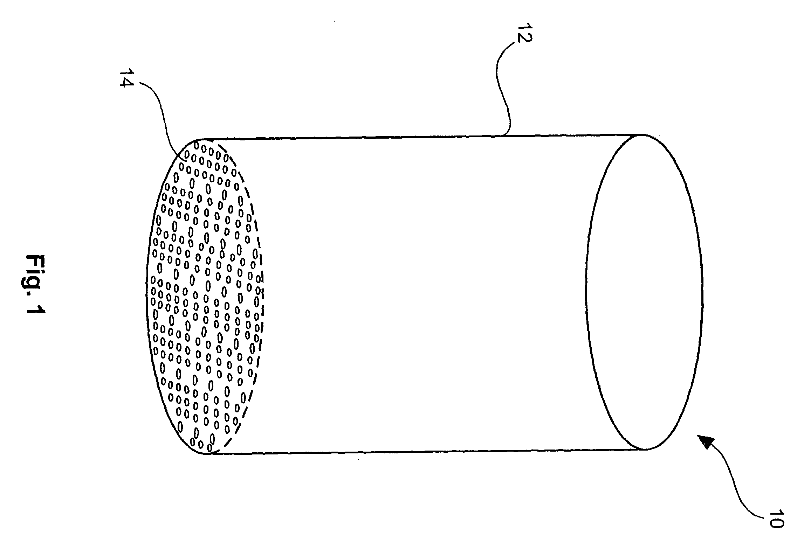

Fig. 1 zeigt das erfindungsgemäße Aquarium, genauer gesagt dessen Wasserbehältnis, in einer schematischen, perspektivischen Darstellung. Das Wasserbehältnis 10 ist von einer durchsichtigen Plexiglaswand 12 eingefasst und auf der Unterseite durch eine Bodenplatte 14 begrenzt. Das Wasserbehältnis 10 ist zylindrisch ausgebildet und besitzt einen Durchmesser von etwa 1,2 bis 1,4 m. Die Höhe des Wasserbehältnisses beträgt etwa 2 m. In der Bodenplatte 14 befinden sich in Reihen angeordnete Einlassöffnungen 22 und Absaugöffnungen 24. Die Zahl und Größe der Öffnungen und Reihen in Figur 1 ist nicht maßstabsgerecht dargestellt, wie sich aus der weiteren Beschreibung näher ergibt. Die Öffnungen sind annähernd gleichmäßig über die gesamte Fläche der Bodenplatte verteilt.

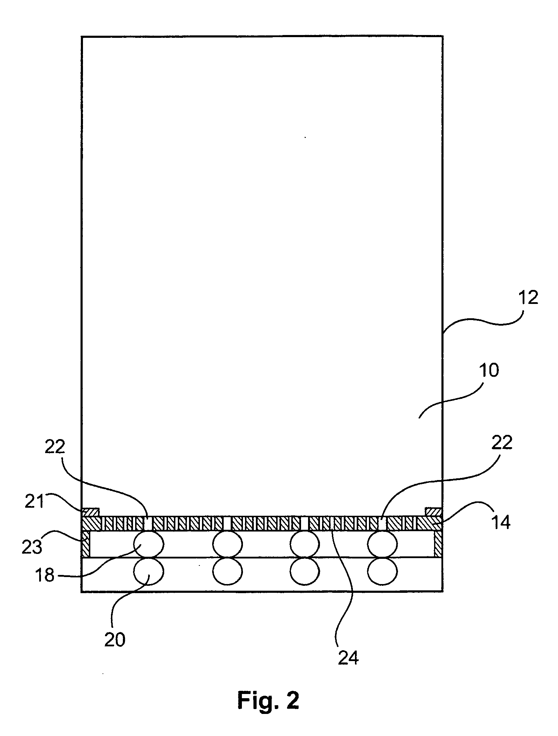

Wie Fig. 2 zu entnehmen ist, ist unterhalb des Wasserbehältnisses 10 und der Bodenplatte 14 ein Wasserraum 16 angeordnet, in dem eine Zuleitungsrohrleitung 18 und eine Ableitungsrohrleitung 20 angeordnet sind. Die Zuleitungsrohrleitung 18 und die Ableitungsrohrleitung 20 sind jeweils übereinander angeordnet und grenzen an die Bodenplatte 14 an, so dass der Wasserraum 16 in mehrere Teilräume 16.1, 16.2 und 16.3 etc. unterteilt ist. Einlassöffnungen 22 in der Bodenplatte 14 sind bei waagerecht angeordneter Bodenplatte 14 senkrecht nach oben ausgerichtet, so dass sich eine senkrecht nach oben gerichtete Strömung des in das Wasserbehältnis einströmenden Wassers ergibt. Die Einlassöffnungen 22 sind unmittelbar an die Zuleitungsrohrleitung 18 angeschlossen. Zwischen den Einlassöffnungen 22 sind Absaugöffnungen 24 angeordnet.

Die Zuleitungsrohrleitung 18 und die Ableitungsrohrleitung 20 sind mit der Bodenplatte 14 verbunden, so dass sie zusammen mit der Bodenplatte 14 in einem Stück angehoben und entfernt werden können, um so den Wasserraum 16, die Bodenplatte 14 und die Rohrleitungen 18 und 20 leicht reinigen zu können.

Seitlich ist die Bodenplatte 14 durch einen oberhalb der Bodenplatte angeordneten Ring 21 und durch eine unterhalb der Bodenplatte 14 an deren Peripherie angebrachten Schürze 23 verstärkt, so dass die Bodenplatte 14 insbesondere biegesteifer wird. Außerdem dichtet der Ring 21 die Bodenplatte 14 seitlich gegenüber der Plexiglaswand 12 wenigstens annähernd ab.

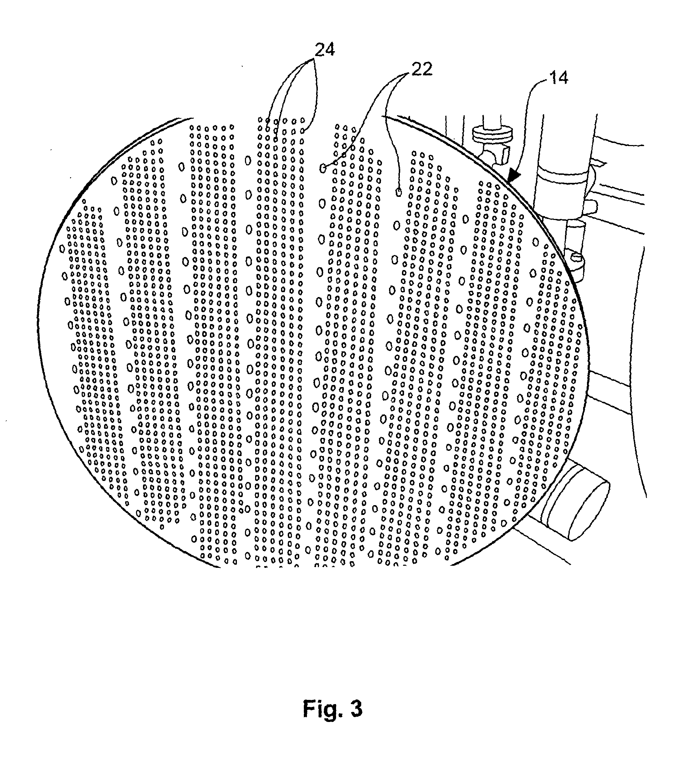

Fig. 3 zeigt, dass die Bodenplatte 14 eine Vielzahl von in Reihen angeordneten Einlassöffnungen 22 sowie eine noch größere Zahl von ebenfalls in Reihen angeordneten Absaugöffnungen 24 aufweist. Zwischen einer Reihe von Einlassöffnungen 22 sind mehrere Reihen mit Absaugöffnungen 24 angeordnet. Dabei ist der Abstand einer jeweiligen Reihe von Einlassöffnungen von den Reihen der Absaugöffnungen 24 größer als der Abstand, den die Reihen von Absaugöffnungen 24 untereinander haben.

Zwischen jeweils zwei Reihen von Einlassöffnungen sind jeweils sieben Reihen von Absaugöffnungen angeordnet. Die Absaugöffnungen 24 haben innerhalb ihrer jeweiligen Reihe einen geringeren Abstand als die Einlassöffnungen 22 innerhalb ihrer Reihen voneinander haben. Der Abstand, den die Absaugöffnungen 24 innerhalb ihrer Reihen voneinander haben, entspricht dem Abstand, den die Reihen von Absaugöffnungen 24 voneinander haben.

Die Anzahl der Absaugöffnungen 24 ist etwa zwanzigmal größer als die Anzahl der Einlassöffnungen 22.

Der Durchmesser der kreisrunden Einlassöffnungen 22 beträgt etwa 7 bis 8 mm, so dass die Querschnittfläche der Einlassöffnungen 22 etwa 0,5 cm² entspricht. Die ebenfalls kreisrunden Absaugöffnungen 24 haben einen etwas geringeren Durchmesser als die Einlassöffnungen 22, nämlich etwa 2 bis 5 mm und entsprechend eine Querschnittsfläche von etwa 0,05 bis 0,2 cm².

Aufgrund der wesentlich größeren Anzahl der Absaugöffnungen 24 gegenüber den Einlassöffnungen 22 ist die Gesamtfläche aller Absaugöffnungen 24 etwa fünfzehnmal größer als die Gesamtfläche aller Absaugöffnungen zusammengenommen. Da die dem Wasserbehältnis 10 über die Einlassöffnungen 22 zugeführte Wassermenge der über die Absaugöffnungen 24 abfließenden Wassermenge ist, ist die Strömungsgeschwindigkeit durch die Einlassöffnungen 22 entsprechend wesentlich größer als die Strömungsgeschwindigkeit durch die Absaugöffnungen 22. Dies führt zum einen dazu, dass das durch die Einlassöffnungen 22 einströmende Wasser das Wasser im gesamten Wasserbehältnis 10 in Bewegung hält. Zum anderen ist die Geschwindigkeit des durch die Absaugöffnungen 24 abfließenden Wassers so gering, dass keine Gefahr besteht, dass Quallen an die Absaugöffnungen angesaugt werden. Dazu kommt, dass der Abstand der Reihen mit Einlassöffnungen 22 so bemessen ist, dass er etwas kleiner ist als der Durchmesser ausgewachsener Quallen, so dass Quallen schon von daher nicht an die Absaugöffnungen 24 geraten können. Der Abstand der Reihen von Einlassöffnungen 22 voneinander beträgt etwa 20 cm.

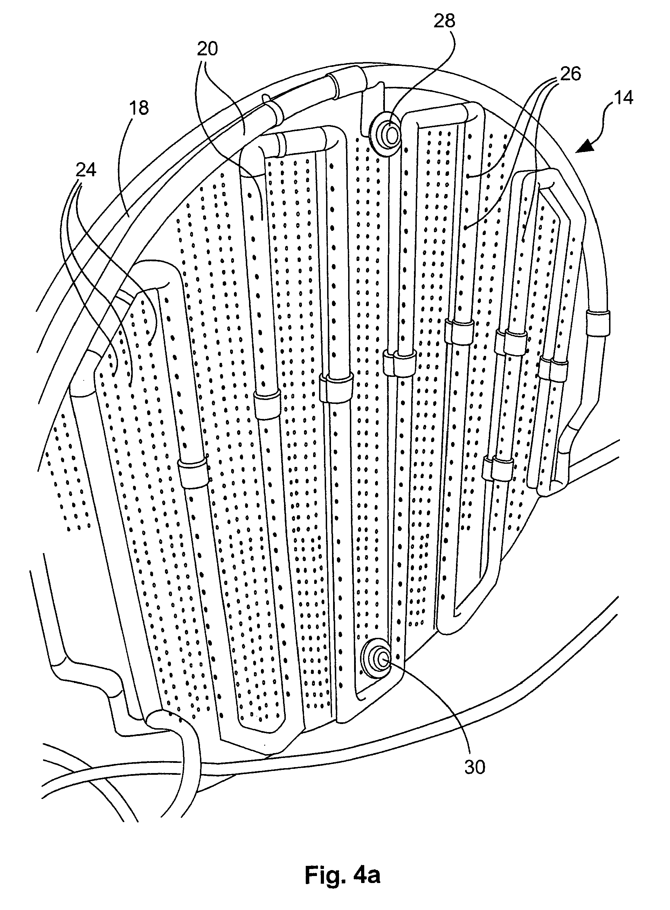

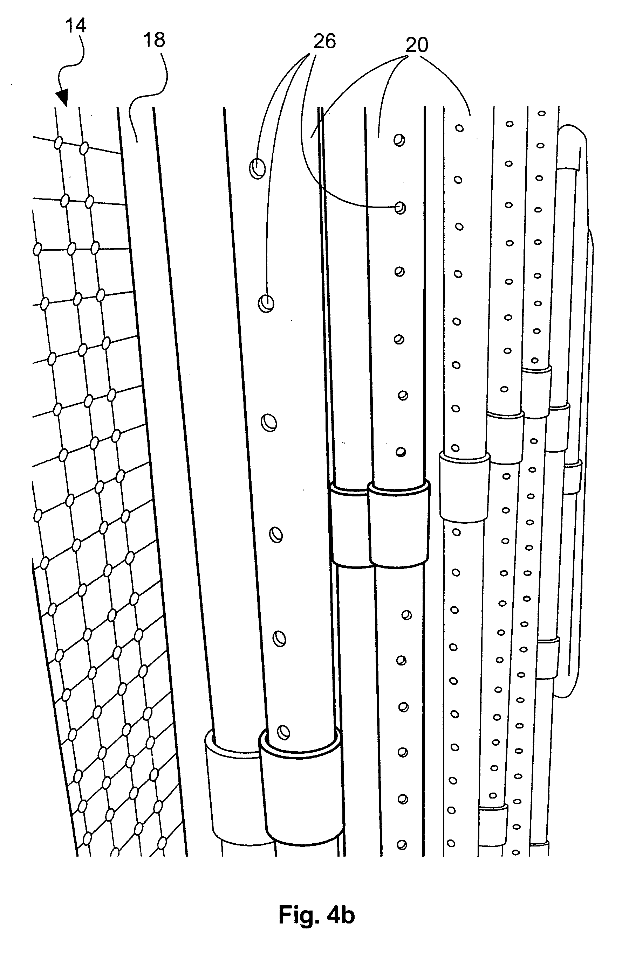

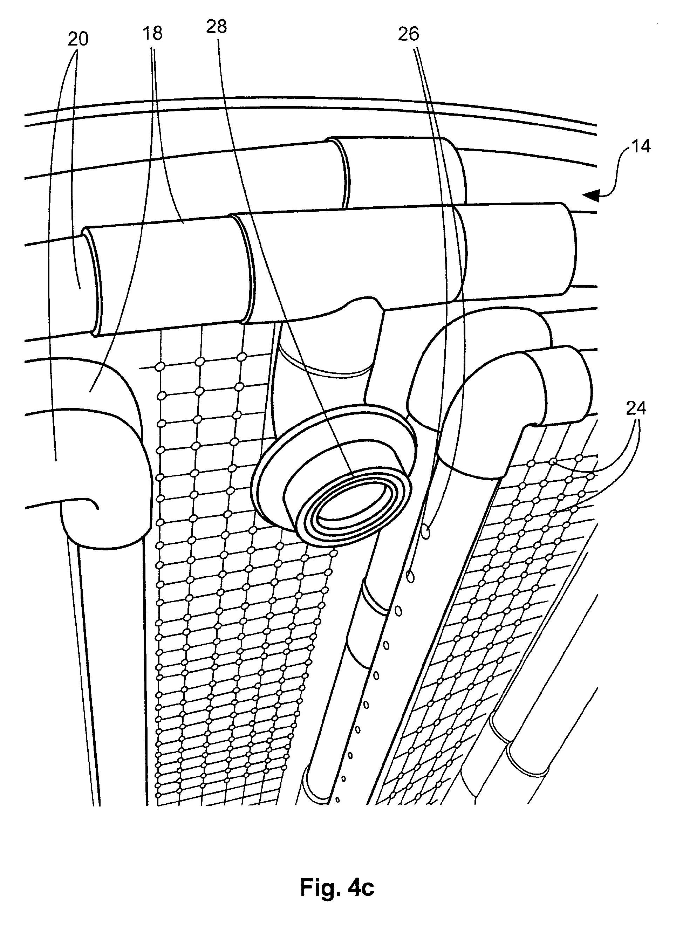

Figuren 4a bis 4c zeigen die Bodenplatte 14 in verschiedenen Ansichten von unten mit daran befestigtem Zuleitungsrohr 18 und Ableitungsrohr 20. Dabei ist Fig. 4a eine perspektivische Übersicht über die Unterseite der Bodenplatte 14, aus der sich ergibt, wie die Zuleitungsrohrleitung 18 und die Ableitungsrohrleitung 20 in Schlangenlinien unterhalb der Bodenplatte 14 verlegt sind. Fig. 4b zeigt einen Ausschnitt der Bodenplatte mit darunter angeordneter Zuleitungsrohrleitung 18 und Ableitungsrohrleitung 20. Dem Ausschnitt in Fig. 4b sind auch klar auf beiden Seiten seitlich der Ableitungsrohrleitung 20 angeordnete Ansaugöffnungen 26 zu entnehmen. Schließlich zeigt 4c einen zentralen Wasseranschluss 28 an der Ableitungsrohrleitung 20. Ein entsprechender, zentraler Wasserzuleitungsanschluss 30 an der Zuleitungsrohrleitung 18 ist Figur 4a zu entnehmen. Der Wasseranschluss 28 und der Wasserzuleitungsanschluss 30 sind jeweils über ein T-Stück mit der Zuleitungsrohrleitung 18 bzw. der Ableitungsrohrleitung 20 verbunden und die Zuleitungsrohrleitung 18 und die Ableitungsrohrleitung 20 sind jeweils als Ringleitung ausgebildet.

Die Zuleitungsrohrleitung 18 und die Ableitungsrohrleitung 20 können weitere, in den Abbildungen nicht dargestellte Wasseranschlüsse aufweisen, die im normalen Betrieb geschlossen sind und nur für das Reinigen der jeweiligen Rohrleitung genutzt werden.

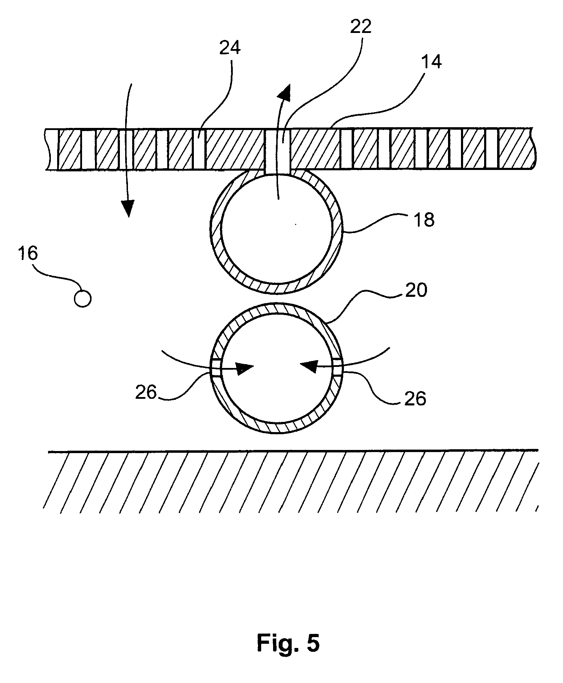

Fig. 5 zeigt, wie die Zuleitungsrohrleitung 18 und die Ableitungsrohrleitung 20 unterhalb der Bodenplatte 14 angeordnet sind. Insbesondere ist Fig. 5 zu entnehmen, dass die Zuleitungsrohrleitung 18 auf ihrer Oberseite Öffnungen in Form von Löchern aufweist, die in die Einlassöffnungen 22 in der Bodenplatte 14 übergehen. Zu erkennen ist außerdem, dass die unterhalb der Zuleitungsrohrleitung 18 angeordnete Ableitungsrohrleitung 20 auf beiden Seiten seitlich angeordnete Ansaugöffnungen 26 aufweist, die in den Wasserraum 16 münden und dem Ansaugen aus dem Wasserraum 16 dienen. Die Absaugöffnungen 24 in der Bodenplatte 14 erlauben es dabei, dass Wasser aus dem Wasserbehältnis 10 durch die Bodenplatte 14 hindurch in den Wasserraum 16 gelangen kann, um dort über die seitlichen Ansaugöffnungen 26 der Ableitungsrohrleitung 20 angesaugt zu werden.

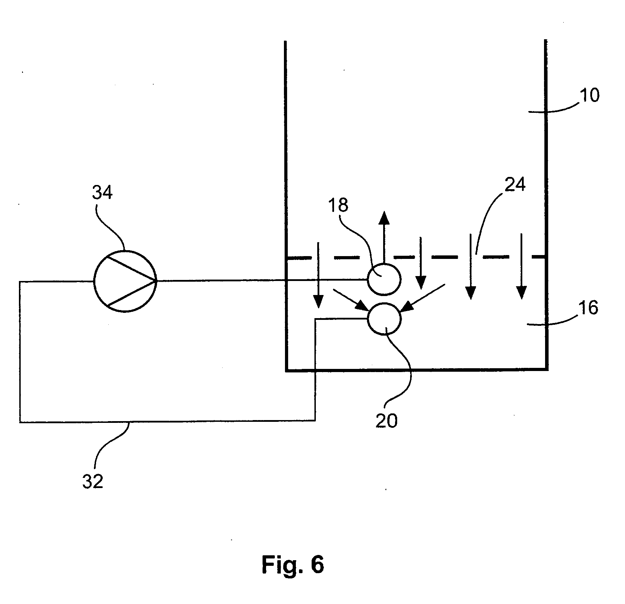

Fig. 6 zeigt schließlich, dass die Zuleitungsrohrleitung 18 und die Ableitungsrohrleitung 20 über eine Zirkulationsleitung 32, in der eine Pumpe 34 angeordnet ist, miteinander verbunden sind. Die Pumpe 34 bewirkt, dass über die Ableitungsrohrleitung 20 abgesaugtes Wasser der Zuleitungsrohrleitung 18 wieder zugeführt wird und über die Einlassöffnungen 22 in das Wasserbehältnis 10 gepumpt wird. Im gleichen Maße, wie Wasser durch die Einlassöffnungen 22 in das Wasserbehältnis 10 gepumpt wird, tritt Wasser über die Absaugöffnungen 24 aus dem Wasserbehältnis 10 aus und in den Wasserraum 16 ein und gelangt dort über die seitlichen Öffnungen 26 der Ableitungsrohrleitung 20 in die Ableitungsrohrleitung 20 und von dort in die Zirkulationsleitung 32.

Die Förderleistung der Pumpe 34 ist dabei so eingestellt, dass die Strömungsgeschwindigkeit des aus den Einlassöffnungen 22 austretenden Wassers hoch genug ist, um eine Umwälzung des Wassers in dem Wasserbehältnis 10 zu bewirken und gleichzeitig Quallen davon abzuhalten, allzu nahe an die Bodenplatte 14 zu gelangen. Gleichzeitig ist die Strömungsgeschwindigkeit des durch die Absaugöffnungen 24 austretenden Wassers so gering, dass keine Gefahr besteht, dass Quallen durch die Absaugöffnungen 24 angesaugt werden. Vorzugsweise ist die Förderleistung der Pumpe 34 einstellbar, so dass die Strömungsgeschwindigkeit des einströmenden und des ausströmenden Wassers an verschiedene Quallenarten angepasst werden kann.

### Bezugszeichenliste:

- 10: Wasserbehältnis
- 12: Wandung
- 14: Bodenplatte
- 16: Wasserraum
- 18: Zuleitungsrohrleitung
- 20: Ableitungsrohrleitung
- 21: Ring
- 22: Einlassöffnungen
- 23: Schürze
- 24: Absaugöffnungen
- 26: Ansaugöffnungen
- 28: Wasseranschluss
- 30: Wasserzuleitungsanschluss
- 32: Zirkulationsleitung
- 34: Pumpe

## Patentansprüche

1. Aquarium insbesondere zur Haltung von Quallen, mit einem Wasserbehältnis (10), welches an seinem unteren Ende durch eine Bodenplatte (14) begrenzt ist, die Einlassöffnungen (22) zum Einleiten von Wasser in das Wasserbehältnis und Absaugöffnungen (24) zum Absaugen von Wasser aus dem Wasserbehältnis aufweist, wobei die Absaugöffnungen (24) einen Innenraum des Wasserbehältnisses (10) mit einem unterhalb der Bodenplatte (14) befindlichen Wasserraum (16) verbinden, in dem wenigstens eine Ableitungsrohrleitung (20) verlegt ist, die eine Vielzahl von Ansaugöffnungen (26) zum Ansaugen von Wasser aufweist, **dadurch gekennzeichnet, dass** die Einlassöffnungen (22) über wenigstens eine Zuleitungsrohrleitung (18) miteinander verbunden sind.

2. Aquarium nach Anspruch 1, **dadurch gekennzeichnet, dass** die Zuleitungsrohrleitung (18) als Ringleitung ausgebildet ist und wenigstens einen Wasserzuleitungsanschluss (30) nach Art eines T-Stücks aufweist.

3. Aquarium nach Anspruch 1 oder 2, **dadurch gekennzeichnet, dass** die Ableitungsrohrleitung (20) als Ringleitung ausgebildet ist und wenigstens einen Wasseranschluss (28) nach Art eines T-Stücks aufweist.

4. Aquarium nach einem der Ansprüche 1 bis 3, **dadurch gekennzeichnet, dass** die Einlassöffnungen (22) und die Absaugöffnungen (24) jeweils in parallel zueinander verlaufenden Reihen angeordnet sind.

5. Aquarium nach einem der Ansprüche 1 bis 4, **dadurch gekennzeichnet, dass** die Anzahl der Absaugöffnungen (24) etwa zehn bis zwanzig mal größer ist als die Anzahl der Einlassöffnungen (22).

6. Aquarium nach einem der Ansprüche 1 bis 5, **dadurch gekennzeichnet, dass** die Einlassöffnungen (22) jeweils eine größere Querschnittsfläche besitzen als die Absaugöffnungen (24).

7. Aquarium nach einem der Ansprüche 1 bis 6, **dadurch gekennzeichnet, dass** die Einlassöffnungen (22) eine Querschnittsfläche von etwa 0,5 cm² besitzen.

8. Aquarium nach einem der Ansprüche 1 bis 7, **dadurch gekennzeichnet, dass** die Absaugöffnungen (24) eine Querschnittsfläche von etwa 0,2 cm² besitzen.

9. Aquarium nach einem der Ansprüche 1 bis 8, **dadurch gekennzeichnet, dass** alle Einlassöffnungen (22) zusammengenommen eine geringere Querschnittfläche besitzen als alle Absaugöffnungen (24) zusammengenommen.

10. Aquarium nach einem der Ansprüche 1 bis 9, **dadurch gekennzeichnet, dass** die Zuleitungsrohrleitung (18) und die Ableitungsrohrleitung (20) übereinander angeordnet sind.

11. Aquarium nach einem der Ansprüche 1 bis 10, **dadurch gekennzeichnet, dass** die Zuleitungsrohrleitung (18) unter der Bodenplatte (14) unmittelbar an diese angrenzend angeordnet ist und auf ihrer Oberseite Einlassöffnungen aufweist, die in die Einlassöffnungen (22) der Bodenplatte (14) unmittelbar übergehen.

12. Aquarium nach einem der Ansprüche 1 bis 11, **dadurch gekennzeichnet, dass** die Ableitungsrohrleitung (20) zu beiden Seiten seitlich angeordnete Ansaugöffnungen (26) aufweist, die in den Wasserraum münden.

13. Aquarium nach einem der Ansprüche 1 bis 12, **dadurch gekennzeichnet, dass** die Ableitungsrohrleitung (20) und die Zuleitungsrohrleitung (18) derart schlangenlinienförmig entlang der Bodenplatte (14) so verlegt sind, dass sich gerade Rohrleitungsabschnitte und Wendeabschnitte einander abwechseln, wobei die geraden Rohrleitungsabschnitte jeweils parallel zueinander verlaufen.

14. Aquarium gemäß der Ansprüche 10, 11 und 13, **dadurch gekennzeichnet, dass** der Wasserraum (16) auf seiner Unterseite durch einen Boden begrenzt ist und die Ableitungsrohrleitung (20) und die Zuleitungsrohrleitung (18) den Wasserraum (16) in eine Mehrzahl von ineinander übergehenden Teilräumen unterteilen, die wenigstens durch einen Zwischenraum infolge eines Abstands zwischen der Ableitungsrohrleitung (20) und dem Boden des Wasserraums (16) miteinander verbunden sind, wobei der Abstand zwischen der Ableitungsrohrleitung (20) und dem Boden des Wasserraums (16) kleiner ist als der Durchmesser der Ableitungsrohrleitung (20).

15. Aquarium nach einem der Ansprüche 1 bis 14, **dadurch gekennzeichnet, dass** die Zuleitungsrohrleitung mit einer Pumpe verbunden ist.

## Claims

1. Aquarium, in particular for keeping jellyfish, comprising a water container (10), which is delimited at its bottom end by a base plate (14), which comprises inlet openings (22) for introducing water into the water container and suction openings (24) for suctioning water out of the water container, wherein the suction openings (24) connect an inner chamber of the water container (10) with a water chamber (16) located underneath the base plate (14), in which at least one outgoing pipe (20) is installed, which comprises a plurality of suction openings (26) for suctioning water, **characterised in that** the inlet openings (22) are connected together by at least one incoming pipe (18).

2. Aquarium according to claim 1, **characterised in that** the incoming pipe (18) is designed as a ring pipe and comprises at least one water inlet connection (30) in the form of a T-piece.

3. Aquarium according to claim 1 or 2, **characterised in that** the outgoing pipe (20) is designed in the form of ring pipe and comprises at least one water connection (28) in the form of T-piece.

4. Aquarium according to any one of claims 1 to 3, **characterised in that** the inlet openings (22) and the suction openings (24) are arranged respectively in parallel rows.

5. Aquarium according to any one of claims 1 to 4, **characterised in that** the number of suction openings (24) is approximately ten to twenty times greater than the number of inlet openings (22).

6. Aquarium according to any one of claims 1 to 5, **characterised in that** the inlet openings (22) respectively have a larger cross sectional area than the suction openings (24).

7. Aquarium according to any one of claims 1 to 6, **characterised in that** the inlet openings (22) have a cross sectional area of about 0.5 cm².

8. Aquarium according to any one of claims 1 to 7, **characterised in that** the suction openings (24) have a cross sectional area of about 0.2 cm².

9. Aquarium according to any one of claims 1 to 8, **characterised in that** all of the inlet openings (22) together have a smaller cross sectional area than all of the suctions openings (24) together.

10. Aquarium according to any one of claims 1 to 9, **characterised in that** the incoming pipe (18) and the outgoing pipe (20) are arranged above one another.

11. Aquarium according to any one of claims 1 to 10, **characterised in that** the incoming pipe (18) under the base plate (14) is arranged immediately adjacent to the latter, and on its upper side comprises inlet openings which pass directly into the inlet openings (22) of the base plate (14).

12. Aquarium according to any one of claims 1 to 11, **characterised in that** the outgoing pipe (20) on both sides has laterally arranged suction openings (26), which open into the water chamber.

13. Aquarium according to any one of claims 1 to 12, **characterised in that** the outgoing pipe (20) and the incoming pipe (18) are installed serpentine-like along the base plate (14), so that the pipe sections and turning sections alternate, wherein the straight pipe sections run parallel to one another respectively.

14. Aquarium according to claims 10, 11 and 13, **characterised in that** the water chamber (16) on its bottom side is delimited by a base, and the outgoing pipe (20) and the incoming pipe (18) divide the water chamber (16) into a plurality of part chambers merging into one another, which are connected at least by an intermediate chamber owing to the distance between the outgoing pipe (20) and the bottom of the water chamber (16), wherein the distance between the outgoing pipe (20) and the base of the water chamber (16) is smaller than the diameter of the outgoing pipe (20).

15. Aquarium according to any one of claims 1 to 14, **characterised in that** the incoming pipe is connected to a pump.

## Revendications

1. Aquarium, notamment pour contenir des méduses, avec un récipient d'eau (10) délimité au niveau de son extrémité inférieure par une plaque de fond (14), comportant des ouvertures d'admission (22) pour amener de l'eau dans le récipient d'eau et des ouvertures d'aspiration (24) pour aspirer l'eau provenant du récipient d'eau, les ouvertures d'aspiration (24) reliant un espace intérieur du récipient d'eau (10) à un espace rempli d'eau (16) situé en dessous de la plaque de fond (14), dans lequel est disposée au moins une conduite tubulaire d'évacuation (20) qui comporte une pluralité d'ouvertures d'aspiration (26) pour aspirer de l'eau, **caractérisé en ce que** les ouvertures d'admission (22) sont reliées entre elles par le biais d'au moins une conduite tubulaire d'amenée (18).

2. Aquarium selon la revendication 1, **caractérisé en ce que** la conduite tubulaire d'amenée (18) prend la forme d'une conduite annulaire et comporte au moins un raccord de conduite d'amenée d'eau (30) du type d'un raccord en T.

3. Aquarium selon la revendication 1 ou 2, **caractérisé en ce que** la conduite tubulaire d'évacuation (20) prend la forme d'une conduite annulaire et comporte au moins un raccord d'eau (28) du type d'un raccord en T.

4. Aquarium selon l'une quelconque des revendications 1 à 3, **caractérisé en ce que** les ouvertures d'admission (22) et les ouvertures d'aspiration (24) sont respectivement disposées selon des lignes parallèles entre elles.

5. Aquarium selon l'une quelconque des revendications 1 à 4, **caractérisé en ce que** le nombre d'ouvertures d'aspiration (24) est approximativement dix à vingt fois supérieur au nombre d'ouvertures d'admission (22).

6. Aquarium selon l'une quelconque des revendications 1 à 5, **caractérisé en ce que** les ouvertures d'admission (22) possèdent respectivement une plus grande surface en section transversale que les ouvertures d'aspiration (24).

7. Aquarium selon l'une quelconque des revendications 1 à 6, **caractérisé en ce que** les ouvertures d'admission (22) possèdent une surface en section transversale d'environ 0,5 cm².

8. Aquarium selon l'une quelconque des revendications 1 à 7, **caractérisé en ce que** les ouvertures d'aspiration (24) possèdent une surface en section transversale d'environ 0,2 cm².

9. Aquarium selon l'une quelconque des revendications 1 à 8, **caractérisé en ce que** toutes les ouvertures d'admission (22) possèdent ensemble une surface en section transversale plus réduite que toutes les ouvertures d'aspiration (24) ensemble.

10. Aquarium selon l'une quelconque des revendications 1 à 9, **caractérisé en ce que** la conduite tubulaire d'amenée (18) et la conduite tubulaire d'évacuation (20) sont disposées l'une au-dessus de l'autre.

11. Aquarium selon l'une quelconque des revendications 1 à 10, **caractérisé en ce que** la conduite tubulaire d'amenée (18) est disposée sous la plaque de fond (14) directement contre celle-ci et comporte sur son côté supérieur des ouvertures d'admission se transformant directement en ouvertures d'admission (22) de la plaque de fond (14).

12. Aquarium selon l'une quelconque des revendications 1 à 11, **caractérisé en ce que** la conduite tubulaire d'évacuation (20) comporte des ouvertures d'aspiration (26) disposées latéralement par rapport aux deux côtés, lesdites ouvertures débouchant dans l'espace rempli d'eau.

13. Aquarium selon l'une quelconque des revendications 1 à 12, **caractérisé en ce que** la conduite tubulaire d'évacuation (20) et la conduite tubulaire d'amenée (18) sont agencées en forme de ligne tortueuse le long de la plaque de fond (14) de telle sorte qu'on observe une alternance de segments de conduite tubulaire droits et de segments coudés, les segments de conduite tubulaire droits s'étendant respectivement parallèlement les uns par rapport aux autres.

14. Aquarium selon les revendications 10, 11 et 13, **caractérisé en ce que** l'espace rempli d'eau (16) est délimité sur son côté inférieur par un fond et **en ce que** la conduite tubulaire d'évacuation (20) et la conduite tubulaire d'amenée (18) divisent l'espace rempli d'eau (16) en une pluralité d'espaces débouchant les uns dans les autres et reliés entre eux au moins grâce à un espace intermédiaire, du fait d'un écartement prévu entre la conduite tubulaire d'évacuation (20) et le fond de l'espace rempli d'eau (16), l'écartement entre la conduite tubulaire d'évacuation (20) et le fond de l'espace rempli d'eau (16) étant inférieur au diamètre de la conduite tubulaire d'évacuation (20).

15. Aquarium selon l'une quelconque des revendications 1 à 14, **caractérisé en ce que** la conduite tubulaire d'amenée est reliée à une pompe.
